# EUROPEAN PATENT APPLICATION

(11) **EP 3 395 535 A1**
(43) Date of publication of application: **31.10.2018**
(21) Application number: 18167946.5
(22) Date of filing: 18.04.2018
(51) Int. Cl.: B29C 45/72

(54) **SLIDABLE COOLING PIN FOR POST MOLD COOLING**

(30) Priority: 21.04.2017 US 201762488369 P; 04.05.2017 US 201762501521 P
(71) Applicant: YUDO ValuePro Lab Canada Inc., Concord, ON L4K 3X7 (CA)
(72) Inventor: UNTERLANDER, Richard Matthias, Concord, Ontario L4K 3X7 (CA); POCOCK, John Francis Edward, Mississauga, Ontario L4V 1W1 (CA); ARNOTT, Robin Alexander, Alliston, Ontario L9R 1V3 (CA)
(74) Representative: Games, Robert Harland

(57) **Abstract**

An apparatus includes a cooling pin to slidably extend from a frame and to be inserted into an injection molded article. The cooling pin is hollow to allow for flow of cooling fluid through the cooling pin. The cooling pin has a hole to be in fluid communication with a source of vacuum to draw cooling fluid within the injection molded article into the cooling pin. The cooling pin has a first position with respect to the frame, the first position to allow flow of cooling fluid through the hole. The cooling pin has a second position with respect to the frame, the second position to shut off flow of cooling fluid into the cooling pin.

## Description

### Cross-Reference to Related Applications

This application claims the benefit of US 62/488,369, filed Apr. 21, 2017, and US 62/501,521, filed May 4, 2017, both of which are incorporated herein by reference.

### Field

The invention relates to post-mold cooling of articles, such as injection molded preforms.

### Background

The injection molding of preforms is well known. It is also known to remove preforms from the mold in a partially cooled state and subsequently cool them in automatic handling equipment designed to remove residual heat from both their external and internal surfaces. Prior art examples of said automatic handling equipment are discussed below.

US 2016/0200012, entitled "Post-Mold Cooling Method and Apparatus with Cyclone Cooling Effect," teaches an annular spiral inducing flow element that enhances the cooling effect of a fluid cooling stream passing through the interior of a preform. This document also teaches that suction can be used, instead of or in addition to positive pressure, to impart motion to the cooling air. This can be done with or without sealing the preform to the plate. This application is owned by the present Applicant and is incorporated herein by reference.

US 6171541, entitled "Preform Post-Mold Cooling Method and Apparatus," teaches a cooling pin inserted into a preform held in a cooling tube and applying a flow of cooling fluid directly to the internal dome portion of the preform via the tip portion of a cooling pin. Different configurations of the cooling tube geometry are shown and the use of vacuum to remove the molded article from the cooling tube is also taught. This document teaches providing a separate channel and vacuum source for removing the cooling air from the interior of the molded article.

US 6475422, entitled "Preform Post-Mold Cooling Method and Apparatus," teaches removing cooled molded articles from carrier plate by applying a vacuum to the cooled mold articles via cooling pins and moving a frame relative to the carrier plate.

US 4592719, entitled "Apparatus for Manufacturing Plastic Bottles from Molded Hollow Preforms," teaches a cooling pin that uses a vacuum to draw atmospheric cooling air through the open end of the preform held in a cooling tube. The warmed air is exhausted via the tubular cooling pin and conduit in the mounting frame. The tip of the cooling tube touches the dome portion of the preform and thereby spaces the top sealing surface (TSS) of the preform away from the frame surface thereby creating an inlet for the cooling air to enter the interior of the preform.

EP 0937566, entitled, "Cooling and Removal System for Injection Moulded Hollow Bodies," teaches a cooling pin having the capability to create a vacuum inside the respective preform in order to suck it onto the nozzle itself or to give off a jet of compressed air to expel the preform.

### Summary of the Invention

The invention uses a hollow sliding cooling pin to supply or remove a flow of cooling fluid through the interior space of a preform while its exterior surface is being cooled in a cooling tube. The sliding pin is moved toward the preform by a biasing mechanism in the frame and is moved away from the preform by contact with an exterior surface of the preform or the cooling tube. The sliding cooling pin is automatically connected to a source of vacuum or fluid pressure or is blocked from the source of vacuum or fluid pressure by the sliding action of the sliding cooling pin.

According to an aspect of the invention, an apparatus includes a cooling pin to slidably extend from a frame and to be inserted into an injection molded article. The cooling pin is hollow to allow for flow of cooling fluid through the cooling pin. The cooling pin has a hole to be in fluid communication with a source of vacuum to draw cooling fluid within the injection molded article into the cooling pin. The cooling pin has a first position with respect to the frame, the first position to allow flow of cooling fluid through the hole. The cooling pin has a second position with respect to the frame, the second position to shut off flow of cooling fluid into the cooling pin.

The cooling pin may have a third position with respect to the frame, the third position to shut off the source of vacuum at the hole.

The apparatus may further include a biasing mechanism coupled to the cooling pin, the biasing mechanism to bias the cooling pin away from the second position and towards the third position.

The apparatus may further include a biasing mechanism coupled to the cooling pin, the biasing mechanism to bias the cooling pin towards the injection molded article to eject the injection molded article off the cooling pin.

The biasing mechanism include a spring.

Vacuum applied at the hole of the cooling pin may hold the cooling pin in the second position and may hold the injection molded article with respect to the cooling pin.

The second position of the cooling pin may seal an open end of the injection molded article closed to block intake of cooling fluid into the injection molded article and the cooling pin.

The apparatus may further include a spiral-flow inducing annular element slidable with the cooling pin. The spiral-flow inducing annular element may provide cooling fluid into the injection molded article in the first position and may block intake of cooling fluid into the injection molded article in the second position.

The cooling pin may have a plurality of holes including the hole.

The injection molded article may be an injection molded preform.

These and other aspects of the invention are disclosed in detail below.

### Brief Description of the Figures

Figure 1 is a cross-sectional view of a first embodiment in a first position.
Figure 2 is a cross-sectional view of the first embodiment in a second position.
Figure 3 is a cross-sectional view of the first embodiment in a third position.
Figure 4 is a cross-sectional view of a variation of the first embodiment.
Figure 5 is a cross-sectional view of a second embodiment.
Figure 6 is a cross-sectional view of a third embodiment in a first position.
Figure 7 is a cross-sectional view of the third embodiment in a second position.
Figure 8 is a cross-sectional view of the third embodiment in a third position.
Figure 8A is a cross-sectional view of a fourth embodiment.
Figure 9 is a cross-sectional view of a fifth embodiment in a first position.
Figure 10 is a cross-sectional view of the fifth embodiment in a second position.
Figure 11 is a cross-sectional view of the fifth embodiment in a third position.
Figure 11A is a cross-sectional view of the sixth embodiment.
Figure 12 is a cross-sectional view of a seventh embodiment in a seated position.
Figure 13 is a cross-sectional view of the seventh embodiment in a cooling position.
Figure 14 is a cross-sectional view of the seventh embodiment in a releasing position.
Figure 15 is a perspective view of the seventh embodiment.
Figure 16 is a perspective view of the seventh embodiment in an arrangement.

### Detailed Description of the Invention

The apparatuses discussed herein include a sliding cooling pin. Such a sliding cooling pin and related components may be included in a cooling apparatus for injection molding. For example, an array of such sliding cooling pins may be installed at a plate that is used to carry and/or cool a plurality of preforms. Such a sliding cooling pin and related components may be installed at an injection molding machine.

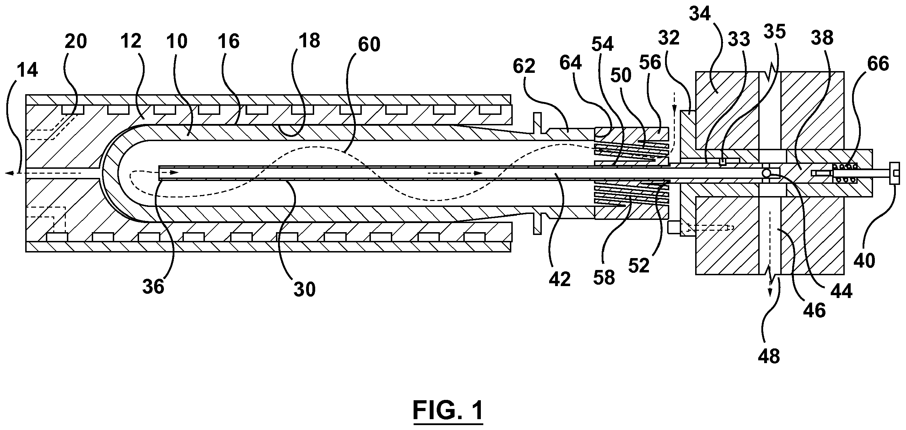

Figure 1 shows a first position of the first embodiment in which a preform 10 is inside a cooling tube 12. The preform is drawn further into the cooling tube 12 as its external diameter shrinks by the vacuum 14. This maintains the preform's exterior surface 16 in intimate contact with the interior surface 18 of the cooling tube thereby facilitating heat transfer from the preform 10 to the cooling tube's water cooling circuit 20. A cooling pin 30, which is slidably mounted in a holder 32, which itself is mounted in a frame 34, is inserted into the interior space of the preform 10 while the preform 10 is inside the cooling tube 12. The cooling pin 30 comprises a hollow tube 42 with a first end that is open 36 and does not touch the interior surface of the preform 10. The opposed end 38 of the cooling pin 30 comprises a closed end that receives a shoulder screw 40. The hollow tube 42 terminates near the end 38 at one or more transverse holes 44 that are in fluid communication with a conduit 46 that passes through holder 32 and frame 34 and is connected to a source of vacuum 48.

A spiral-flow inducing annular element 50 is fastened to the cooling pin 30 at shoulder location 52. The spiral-flow inducing element 50 comprises two concentric annular tubes, an inner tube 54 that fits tightly around the cooling pin 30, and an outer tube 56 that is spaced from and connected to the inner tube 54 by contoured fins or blades 58 which are configured to induce a spiral flow to a cooling fluid stream 60 that passes therethrough. An anti-rotation device comprising slot 33 in holder 32 and pin/key 35 fastened to cooling pin 30 prevent cooling pin 30 from rotating. Absent said anti-rotation device the incoming cooling fluid stream 60 acting on said contoured fins or blades 58 would cause the cooling pin 30 to rotate and thereby reduce effectiveness of the induction of spiral-flow to cooling fluid stream 60. Pin/key 35 slides within slot 33 as the cooling pin 30 slides within holder 32.

The enhanced cooling effects and benefits of said spiral flowing fluid cooling stream are explained in the co-pending US Patent Application Publication US 2016/0200012, entitled "Post-Mold Cooling Method and Apparatus with Cyclone Cooling Effect." The spiral-flow inducing annular element 50 is may be a monolithic component that can be injection molded as a whole using a suitable material. The diameter of the annular element 50 is sized such that its outer diameter substantially matches the outer diameter of the neck finish 62 of the preform 10.

In operation, the cooling pin/frame assembly and preform/cooling tube assembly are moved together in order to introduce the cooling pin 30 into the preform's interior space. During this movement the top sealing surface (TSS) 64 of the preform 10 makes contact with the outer tube 56 of the annular element 50 and continuing movement causes the cooling pin 30 to slide within its holder 32 until a fluid conduit connection is made between the transverse holes 44 and the conduit 46 in the holder and frame thereby initiating a flow of ambient cooling fluid flow 60 through the spiral inducing annular element 50 to the open end 36 of the cooling pin 30 and out via the conduit 46 in the frame. The cooling pin 30 is biased toward the preform 10 by a spring 66, for example, that surrounds the shoulder screw 40. Alternate biasing mechanism, such as an air cylinder, etc. can also be used. The relative movement between the cooling pin/frame assembly and the preform/cooling tube assembly is stopped before the outer tube 56 touches the shoulder 32 which would block the flow of ambient air being induced. A suitable gap between the outer tube 56 and shoulder 32 is established by trial and error to optimize the flow rate of the ambient air being induced.

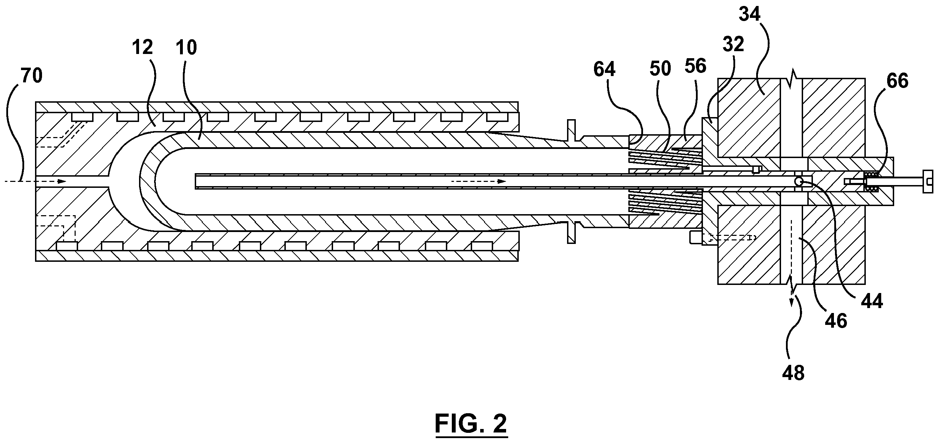

Figure 2 shows a second position of the first embodiment in which the preform 10 is shown being ejected from cooling tube 12 by way of a pressurized fluid 70 that has replaced the vacuum 14 of the first position. Alternate mechanical mechanism, such as a piston acting on the outer surface dome of the preform 10 to cause its ejection, can also be used. The ejecting movement of the preform 10 causes its TSS 64 to push against the outer tube 56 of the annular element 50 which in turn causes the cooling pin 30 to move further into its holder 32 and frame 34 further compressing the biasing mechanism 66. Transverse holes 44 continue to be in fluid connection with vacuum conduit 46 such that when the outer element 56 makes contact with the holder 32 it shuts off the ambient air flow induction into the preform 10 and creates a seal that in consequence increases the intensity of the vacuum inside the preform's interior.

In further operation the cooling pin/frame assembly and preform/cooling tube assembly are moved apart thereby completely withdrawing the preform 10 from the cooling tube 12. The preform 10 is firmly held against the outer element 56 by virtue of the vacuum inside the preform.

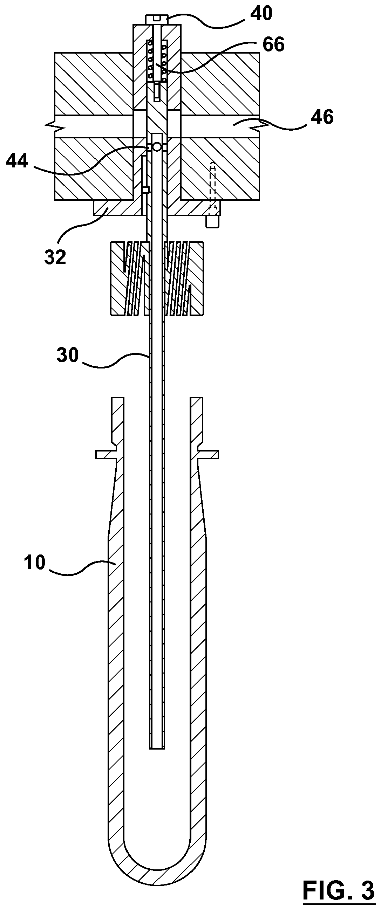

Figure 3 shows a third position of the first embodiment in which the cooling pin/frame assembly has been rotated through 90° to orient the preform 10 vertically with its dome end downwards. While in this orientation the vacuum source 48 is shut off and the biasing mechanism 66 extends thereby sliding the cooling pin 30 away from its holder 32 and allowing the preform 10 to fall by gravity off the cooling pin 30. The cooling pin 30 stops sliding when the head of the shoulder screw 40 bottoms out on the holder 32. In this position the transverse holes 44 of the cooling pin 30 no longer align with the vacuum conduit 46 in the frame so that the re-established vacuum source 48 and vacuum in said conduit 46 is not in fluid connection with the cooling pin's hollow tube 42. Consequently this automatic shut off from the vacuum source saves energy as vacuum is not being pulled through the unused cooling pin. In operation, after ejection of the preform the cooling pin/frame assembly is rotated through 90° to realign the cooling pin 30 for its next cycle of preform cooling.

Using a sliding cooling pin to automatically connect and disconnect to a vacuum source saves the cost of providing some of the expensive valve and control hardware for the handling equipment. The automatic operation of the valving caused by the relative movement of the cooling pin and the preform by way of contact between them or the preform's cooling tube simplifies timing and control of the process, thereby saving cost when setting up the process.

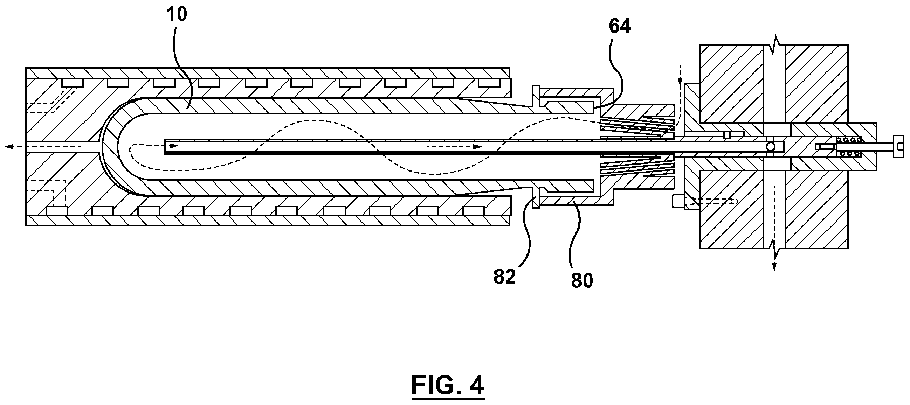

Figure 4 shows a variation of the first embodiment of the invention. In some applications contact between the outer tube 56 of the annular element 50 and the TSS 64 of the preform 10 may not be desirable. Figure 4 shows a tubular extension 80 attached to the outer tube 56 of the annular element 50 in such a way as to contact the support ledge 82, a common feature of most preforms 10. The extension 80 provides clearance between the preform's TSS 64 and the annular element 50. In all other respects this embodiment is configured and operates the same way as the first embodiment described above.

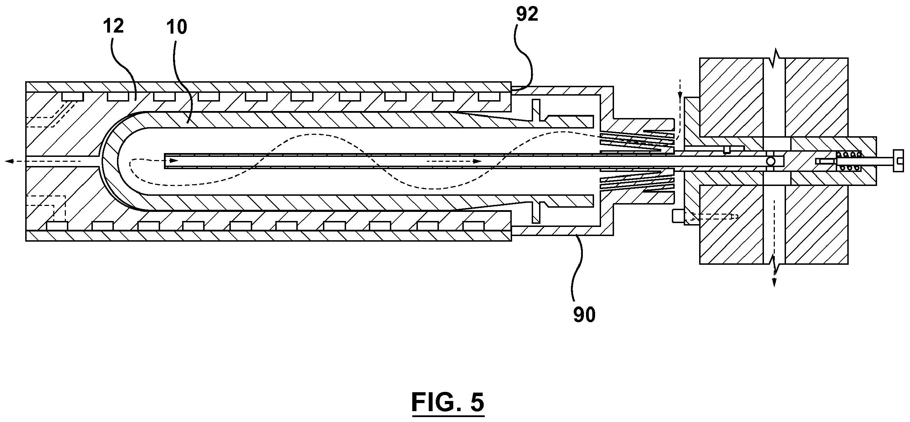

Figure 5 shows a second embodiment of the invention. In some applications contact between any part of the preform 10 and any part of the cooling pin assembly including the outer tube 56 of the annular element 50 may not be desirable. Figure 5 shows an alternate tubular extension 90 attached to the outer tube 56 of the annular element 50 in such a way as to contact the end 92 of the cooling tube 12. The extension 90 provides clearance between the entire preform and the annular element 50. In all other respects this embodiment is configured and operates the same way as the first embodiment described above.

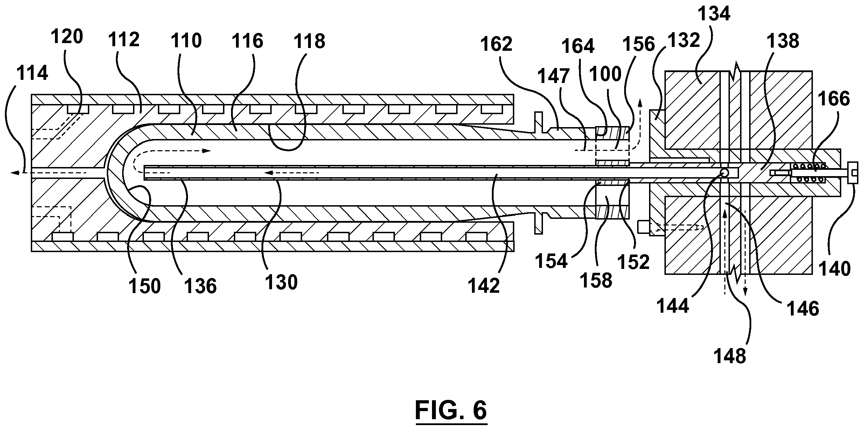

Figure 6 shows a third embodiment in a first position. This embodiment combines the automatic valving features of the sliding cooling pin with a positive pressure cooling fluid stream. This is in contrast to the vacuum induced ambient cooling stream of the first to third embodiments described above, consequently the spiral flow inducing annular element of the former embodiments is replaced with a simple spaced coaxial annular tube element 100.

Figure 6 shows a preform 110 inside a cooling tube 112. The preform is drawn further into the cooling tube 112 as its external diameter shrinks by the vacuum 114. This maintains the preform's exterior surface 116 in intimate contact with the interior surface 118 of the cooling tube thereby optimizing heat transfer from the preform 110 to the cooling tube's water cooling circuit 120. A cooling pin 130, that is slidably mounted in a holder 132, that itself is mounted in a frame 134, is inserted into the interior space of the preform 110 while it is inside the cooling tube 112. The cooling pin 130 comprises a hollow tube 142 with a first end that is open 136 and does not touch the interior surface of the preform 110. The opposed end 138 of the cooling pin 130 comprises a closed end wherein is fastened a shoulder screw 140. The hollow tube 142 terminates near the end 138 at one or more transverse holes 144 that are in fluid communication with a conduit 146 that passes through holder 132 and frame 134 and is connected to a source of pressurized cooling fluid 148. The stream of pressurized cooling fluid 148 flows through the hollow tube 142 directly onto the interior domed surface 150 of the preform 110 and exits the preform interior via its open end to atmosphere in a process well known in the art.

A coaxial annular element 100 is fastened to the cooling pin 130 at shoulder location 152. The annular element 100 comprises two concentric annular tubes, an inner tube 154 that fits tightly around the cooling pin 130, and an outer tube 156 that is spaced from and connected to the inner tube 154 by radial webs or blades 158 which allow the cooling fluid stream 147 to pass therethrough. The diameter of the annular element 100 is sized such that it's outer diameter substantially matches the outer diameter of the neck finish 162 of the preform 110.

In operation, the cooling pin/frame assembly and preform/cooling tube assembly are moved together in order to introduce the cooling pin 130 into the preform's interior space. During this movement the top sealing surface (TSS) 164 of the preform 110 makes contact with the outer tube 156 of the annular element 100 and continuing movement causes the cooling pin 130 to slide within its holder 132 until a fluid conduit connection is made between the transverse holes 144 and the conduit 146 in the holder and frame thereby initiating a flow of pressurized cooling fluid flow 148 through the interior of the preform to its open end and out via the annular element 100 to atmosphere. The cooling pin 130 is biased toward the preform 110 by a spring 166, for example, that surround the shoulder screw 140. Alternate biasing mechanism, such as an air cylinder, etc. can also be used. The relative movement between the cooling pin/frame assembly and the preform/cooling tube assembly is stopped before the outer tube 156 touches the shoulder 132 which would block the flow to atmosphere. A suitable gap between the outer tube 156 and shoulder 132 is established by trial and error to optimize the flow rate of the pressurized cooling fluid flow 148.

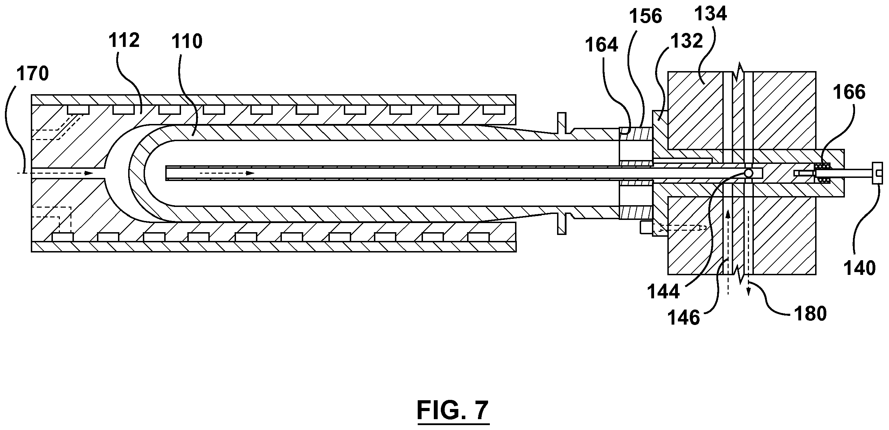

Figure 7 shows a second position of the third embodiment in which the preform 110 is shown being ejected from cooling tube 112 by way of a pressurized fluid 170 that has replaced the vacuum 114 of the first position. Alternate mechanical mechanism, such as a piston acting on the outer surface dome of the preform 110 to cause its ejection, can also be used. The ejecting movement of the preform 110 causes its TSS 164 to push against the outer tube 156 of the annular element 100 which in turn causes the cooling pin 130 to move further into its holder 132 and frame 134 further compressing the biasing mechanism 166. Transverse holes 44 thereby move to a different fluid connection with a vacuum conduit 180 such that when the outer element 156 makes contact with the holder 132 it shuts off the ambient air flow induction and creates a seal that in consequence creates a vacuum inside the preform's interior.

In further operation, the cooling pin/frame assembly and preform/cooling tube assembly are moved apart thereby completely withdrawing the preform 110 from the cooling tube 112. The preform 110 is firmly held against the outer element 156 by virtue of the vacuum inside the preform.

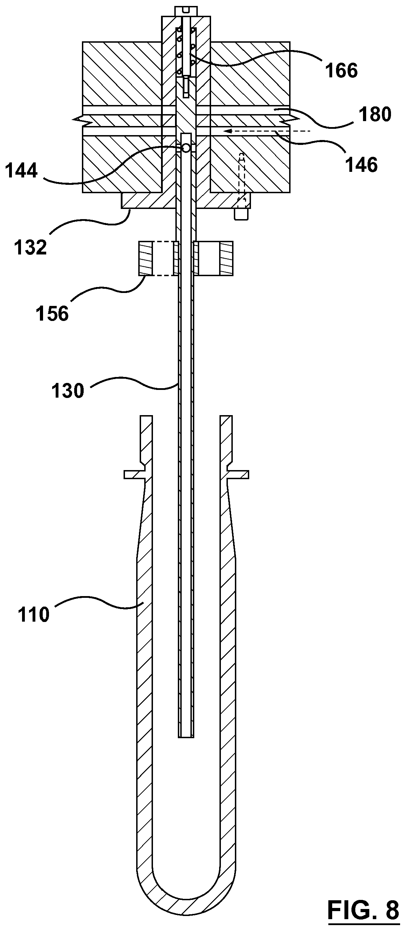

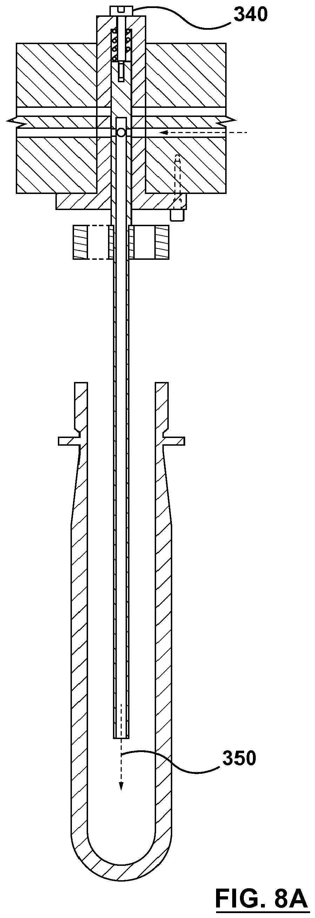

Figure 8 shows a third position of the third embodiment in which the cooling pin/frame assembly has been rotated through 90° to orient the preform 110 vertically with its dome end downwards. While in this orientation the vacuum source 180 is briefly shut off and the biasing mechanism 166 extends thereby sliding the cooling pin 130 away from its holder 132 and allowing the preform 110 to fall by gravity off the cooling pin 130. The cooling pin 30 stops sliding when the head of the shoulder screw 140 bottoms out on the holder 132. In this position the transverse holes 144 of the cooling pin 130 no longer align with either the pressurized source of cooling fluid 146 or the vacuum conduit 180 in the frame so that the uninterrupted pressurized cooling fluid source 146 and the re-established vacuum source 180, and vacuum in said conduit 180, are not in fluid connection with the cooling pin's hollow tube 142. Consequently, this automatic shut off from both the pressurized cooling fluid and vacuum sources saves energy, as neither pressurized cooling fluid is being vented nor is vacuum being pulled through the unused cooling pin. In operation, after ejection of the preform, the cooling pin/frame assembly is rotated through 90° to realign the cooling pin 130 with its next cycle of preform cooling.

Using a sliding cooling pin to automatically connect and disconnect to both pressurized and vacuum sources saves the cost of providing some of the expensive valves and control hardware for the handling equipment. The automatic operation of the valving caused by the relative movement of the cooling pin and the preform by way of contact between them or the preform's cooling tube simplifies timing and control of the process, thereby saving cost when setting up the process.

Figure 8A shows a fourth embodiment which is identical to the third embodiment in all respects except the length of the shoulder screw 340 has been shortened so that the pressurize source is not disconnected but continues to provide a flow of pressurized fluid 350 through the open end of the cooling tube during ejection of the preform and for the remainder of the current cycle. By supplying a flow of pressurized cooling fluid through the cooling pin as it approaches the next preform to be cooled and before the cooling pin has entered the preform's interior the cooling of the preform's interior begins about one second earlier than it would otherwise and thereby optimizes the cycle time of the process.

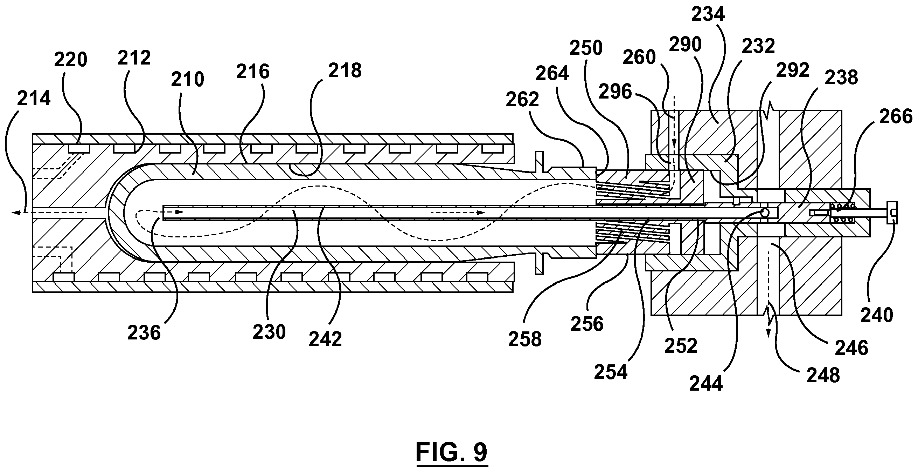

Figure 9 shows a first position of a fifth embodiment in which a preform 210 is inside a cooling tube 212. The preform is drawn further into the cooling tube 212 as its external diameter shrinks by the vacuum 214. This maintains the preform's exterior surface 216 in intimate contact with the interior surface 218 of the cooling tube thereby optimizing heat transfer from the preform 210 to the cooling tube's water cooling circuit 220. A cooling pin 230, that is slidably mounted in a holder 232, that itself is mounted in a frame 234, is inserted into the interior space of the preform 210 while it is inside the cooling tube 212. The cooling pin 230 comprises a hollow tube 242 with a first end that is open 236 and does not touch the interior surface of the preform 210. The opposed end 238 of the cooling pin 230 comprises a closed end wherein is fastened a shoulder screw 240. The hollow tube 242 terminates near the end 238 at one or more transverse holes 244 that are in fluid communication with a conduit 246 that passes through holder 232 and frame 234 and is connected to a source of vacuum 248.

A spiral-flow inducing annular element 250 is fastened to the cooling pin 230 at shoulder location 252. The spiral-flow inducing element 250 comprises two concentric annular tubes, an inner tube 254 that fits tightly around the cooling pin 230, and an outer tube 256 that is spaced from and connected to the inner tube 254 by contoured fins or blades 258 which are configured to induce a spiral flow to a cooling fluid stream 260 that passes therethrough. An anti-rotation device is included in the configuration as described above in the first embodiment.

The enhanced cooling effects and benefits of said spiral flowing fluid cooling stream are explained in the co-pending US Patent Application Publication US 2016/0200012, entitled "Post-Mold Cooling Method and Apparatus with Cyclone Cooling Effect". The spiral-flow inducing annular element 250 also includes a circular base 290 that is sized to slidably fit within cylinder 292 that is incorporated in holder 232. Circular base 290 is attached to the inner tube 254 and is spaced from the lower side of the contoured fins or blades 258 thereby created an annular conduit 294 through which cooling fluid stream 260 flows from port 296 in the sidewall of holder 232. Element 250 may be a monolithic component that can be injection molded as a whole using a suitable material. However, spiral inducing elements 258, 254, 256 and circular base 290 could be an assembly of separate components and/or could be attached separately to the cooling pin 230 individually. The diameter of the annular element 250 is sized such that its outer diameter substantially matches the outer diameter of the neck finish 262 of the preform 210.

In operation, the cooling pin/frame assembly and preform/cooling tube assembly are moved together in order to introduce the cooling pin 230 into the preform's interior space. During this movement the top sealing surface (TSS) 264 of the preform 210 makes contact with the outer tube 256 of the annular element 250 and continuing movement causes the cooling pin 230 to slide within its holder 232 until a fluid conduit connection is made between the transverse holes 244 and the conduit 246 in the holder and frame thereby initiating venting of a pressurized flow of cooling fluid 260 through the spiral inducing annular element 250 to the open end 236 of the cooling pin 230 and out via the conduit 246 in the frame. Simultaneously annular conduit 294 is aligned with port 296 thereby allows pressurized cooling fluid flow 260 to commence. The cooling pin 230 is biased toward the preform 210 by a spring 266, for example, that surrounds the shoulder screw 240. Alternate biasing mechanism, such as an air cylinder, etc. can also be used.

The relative movement between the cooling pin/frame assembly and the preform/cooling tube assembly is stopped at a suitable position to optimize the flow rate of the pressurized cooling fluid flow 260.

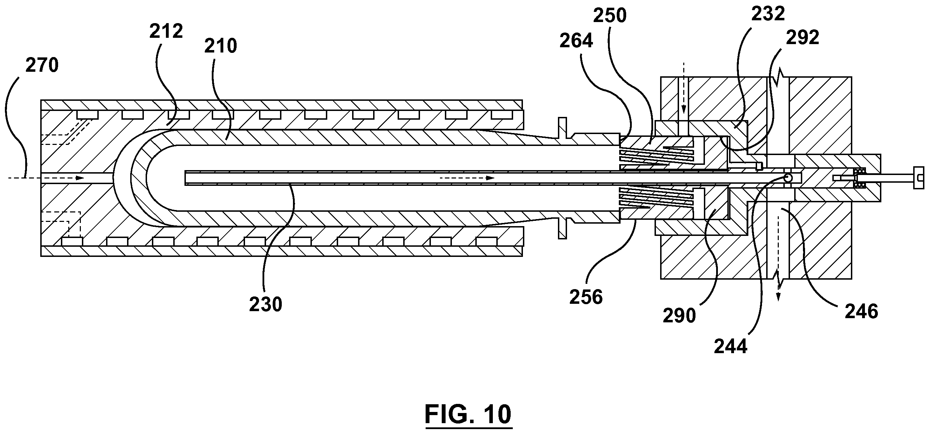

Figure 10 shows a second position of the fifth embodiment in which the preform 210 is shown being ejected from cooling tube 212 by way of a pressurized fluid 270 that has replaced the vacuum 214 of the first position. Alternate mechanical mechanism, such as a piston acting on the outer surface dome of the preform 210 to cause its ejection, can also be used. The ejecting movement of the preform 210 causes its TSS 264 to push against the outer tube 256 of the annular element 250 which in turn causes the cooling pin 230 to move further into its holder 232 further compressing the biasing mechanism 266. Transverse holes 244 continue to be in fluid connection with vacuum conduit 246 such that when the circular base 290 bottoms out in the cylinder 292 it shuts off the pressurized cooling flow 260 and creates a seal that in consequence increases the intensity of the vacuum inside the preform's interior.

In further operation, the cooling pin/frame assembly and preform/cooling tube assembly are moved apart thereby completely withdrawing the preform 210 from the cooling tube 212. The preform 210 is firmly held against the outer element 256 by virtue of the vacuum inside the preform.

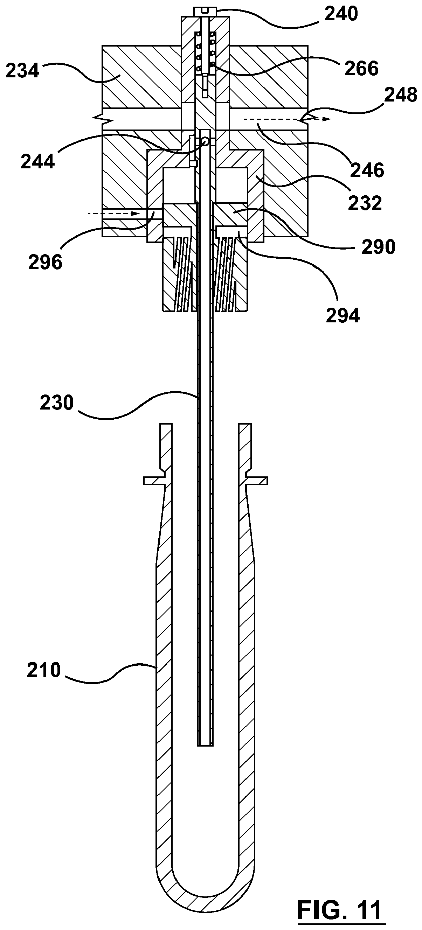

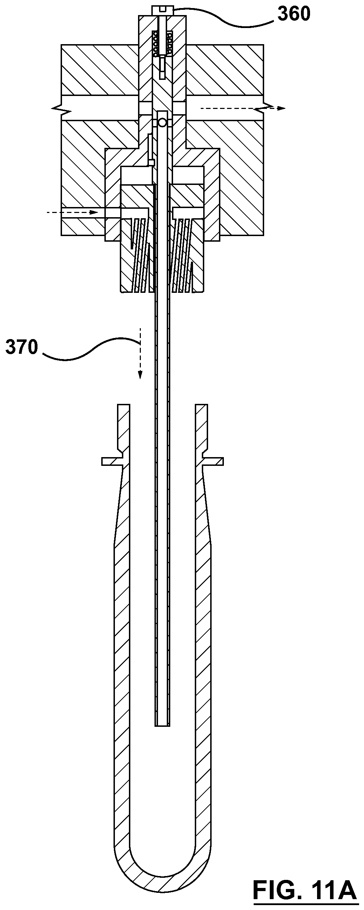

Figure 11 shows a third position of the fifth embodiment in which the cooling pin/frame assembly has been rotated through 90° to orient the preform 210 vertically with its dome end downwards. While in this orientation the vacuum source 248 is briefly shut off and consequently the biasing mechanism 266 extends thereby sliding the cooling pin 230 away from its holder 232, as the annular conduit 294 passes by the port 296 a burst of pressurizing cooling fluid is injected which urges the preform 210 to start falling off the cooling pin 230, a motion which is continued by gravity. The cooling pin 230 stops sliding when the head of the shoulder screw 240 bottoms out on the holder 232. In this position the transverse holes 244 of the cooling pin 230 no longer align with the vacuum conduit 246 in the frame 234 so that the re-established vacuum source 248 and vacuum in said conduit 246 is not in fluid connection with the cooling pin's hollow tube 242. Similarly in this position the annular conduit 294 no longer aligns with the pressurized fluid supply port 296 so that there is no fluid connection between them. Consequently this automatic shut off from the vacuum and pressurized cooling fluid source saves energy as vacuum is not being pulled through the unused cooling pin and pressurized cooling fluid is not being exhausted through the unused cooling pin. In operation, after ejection of the preform the cooling pin/frame assembly is rotated through 90° to realign the cooling pin 230 for its next cycle of preform cooling.

Using a sliding cooling pin to automatically connect and disconnect to vacuum and pressurized fluid source saves the cost of providing some of the expensive valve and control hardware for the handling equipment. The automatic operation of the valving caused by the relative movement of the cooling pin and the preform by way of contact between them simplifies timing and control of the process, thereby saving cost when setting up the process.

Figure 11A shows a sixth embodiment which is identical to the fifth embodiment in all respects except the length of the shoulder screw 360 has been shortened so that the pressurize source is not disconnected but continues to provide a flow of pressurized fluid 370 through the spiral-flow inducing annular element during ejection of the preform and for the remainder of the current cycle. By supplying a flow of pressurized cooling fluid through the spiral-flow inducing annular element as it approaches the next preform to be cooled and before the cooling pin has entered the preform's interior the cooling of the preform's interior begins about one second earlier than it would otherwise and thereby optimizes the cycle time of the process.

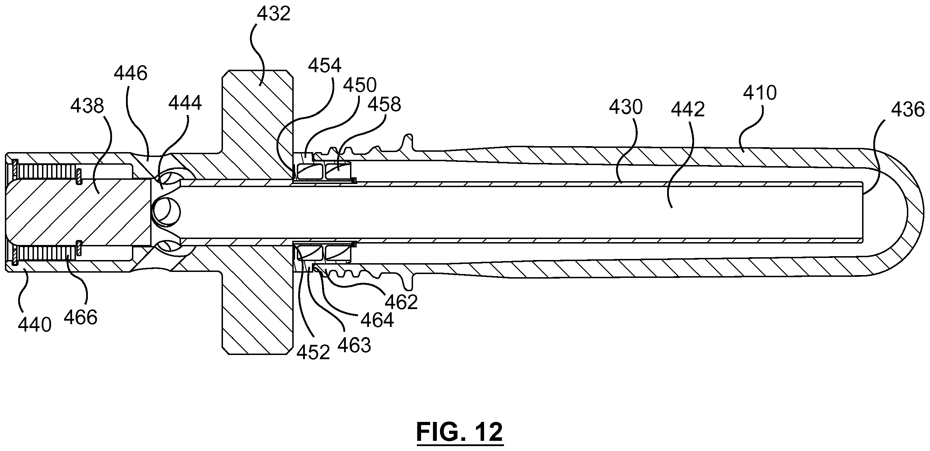

Figure 12 shows a seventh embodiment in a seated position, in which a preform is vacuum-held for moving or transferring the preform. The cooling tube is omitted from the description of the seventh embodiment for sake of explanation, and the description of other embodiments can be referenced for discussion concerning the cooling tube and other features.

A cooling pin 430 is slidably mounted in a holder 432, which can be mounted to a frame, plate, or other structure. The cooling pin 430 can be inserted into the interior space of the preform 410 while the preform 410 is inside a cooling tube. The cooling pin 430 comprises a hollow tube 442 with a first end 436 that is open and that does not touch the interior surface of the preform 410. The opposed end 438 of the cooling pin 430 is closed. The hollow tube 442 terminates near the end 438 at one or more openings 444 that are in fluid communication with a conduit 446 that passes through holder 432 and that is connected to a controllable source of vacuum.

A spiral-flow inducing annular element 450 is fastened to the cooling pin 430 at shoulder location 452. The spiral-flow inducing element 450 comprises one or more spiral channels 458 configured to induce a spiral flow to a cooling fluid stream that passes therethrough. An entrance 454 to the spiral channel 458 is located on a surface of the annular element 450 facing a surface of the holder 432. An anti-rotation device may be provided to prevent the cooling pin 30 from rotating with respect to the holder 432.

The annular element 450 may have a stepped diameter, such that a neck finish 462 of the preform 410 fits over a narrower portion of the annular element 450 and abuts a shoulder 463 that defines the transition to a wider portion of the stepped diameter.

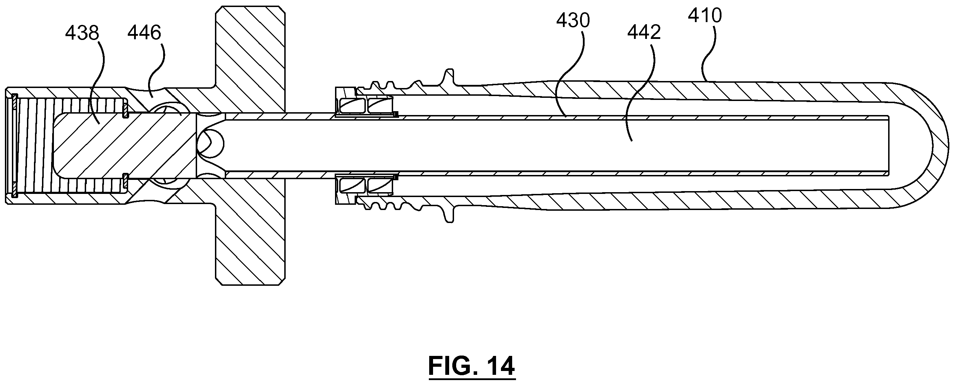

A spring 466, or other biasing mechanism, is provided to the end 438 of the cooling pin 430 away from the preform 410. The spring 466 connects the end 438 of the cooling pin 430 to an end 440 of the holder 432 and biases the cooling pin 430 in a direction towards the preform 410. For example, the end 438 of the cooling pin 430 is positioned within an opening in the end 440 of the holder 432, and the spring 466 engages with a groove on an outside surface of the end 438 of the cooling pin 430 and with an inside groove of the end 440 of the holder 432. Figure 12 shows the spring 466 is a compressed state. The spring 466 tends to urge the cooling pin 430 towards an expanded state, shown in Figure 14, against the force of vacuum provided at holes 444, the force of vacuum acting on the holder 432 through the channel 458 and its entrance 454.

Other biasing mechanism, such as an air cylinder, etc. can be used in addition to or instead of the spring 466. The spring 466 or other biasing mechanism may be positioned at different locations. The spring 466 may be sufficient to provide for anti-rotation of the cooling pin 430 and an additional anti-rotation device may be omitted.

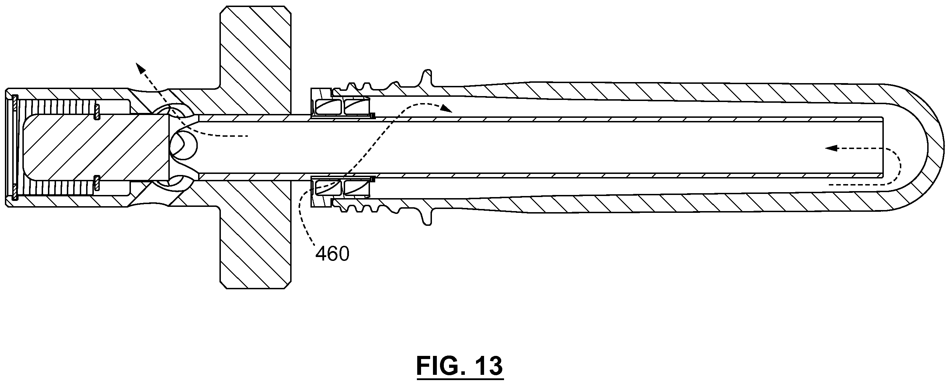

In operation, the cooling pin 430 is introduced into the preform's interior space by relative movement of the preform 410 to the holder 432. The neck finish 462 of the preform 410 fits over the narrower diameter of the annular element 450 and the open end 464 of the preform 410 may contact the shoulder 463 of the annular element 450. Further movement of the preform 410 towards the holder 432 causes the cooling pin 430 to slide within the holder 432, against the spring 466, until a fluid connection is made between the holes 444 in the cooling pin 430 and the vacuum conduit 446 in the holder 432, as shown in Figure 13. The fluid connection initiates a stream 460 of ambient cooling fluid through the annular element 450 to the open end 436 of the cooling pin 430 and out via the conduit 446. The preform 410 can thus be cooled.

Further urging of the preform 410 towards the holder 432, against the spring 466, causes the annular element 450 to abut a surface of the holder 432 thereby obstructing the intake of cooling fluid at the entrance 454 of the spiral channel 458, as shown in Figure 12. While vacuum at the conduit 446 is maintained, the preform 410 is held to the holder 432 to allow for moving or transferring the preform 410 by moving the frame, plate, or other structure that bears the holder 432.

When vacuum at conduit 446 is shut off, resistance against expansion of the spring 466 ceases. The spring 466 expands, thereby sliding the cooling pin 430 away from its holder 432, as shown in Figure 14, to allow the preform 410 to fall off the annular element 450 and cooling pin 430. The preform 410 can thus be ejected or released.

Further, the end 438 of the cooling pin 430 moves into a position that blocks the conduit 446, so that vacuum can be reapplied to the conduit 446 without drawing cooling fluid through the hollow tube 442, until another preform 410 is positioned on the cooling pin 430 and the cooling pin 430 is pushed back into the position shown in Figure 13.

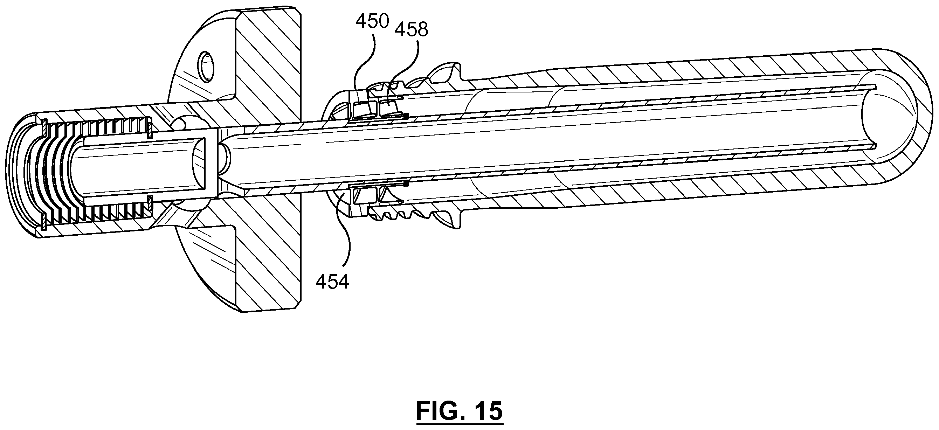

Figure 15 shows the apparatus according to the seventh embodiment in perspective. The entrance 454 to the channel 458 in the annular element 450 is shown. The apparatus is depicted in the releasing position.

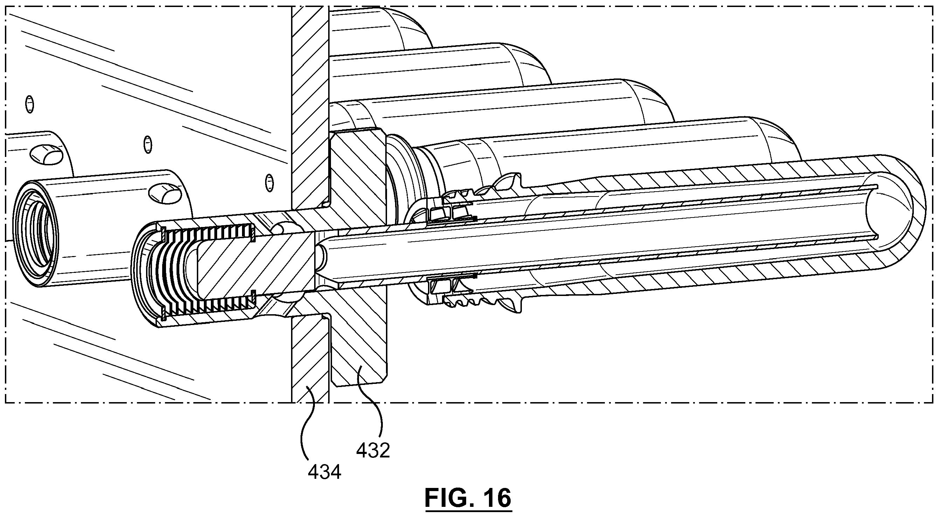

Figure 16 shows a plurality of apparatuses according to the seventh embodiment attached to a plate 434. A diameter of each holder 432 can be fit into complementary openings in the plate 434 using threading, bolting, or similar technique.

In addition, although spiral or cyclone-type cooling fluid flow is described in the above, it should be apparent that other types of flow are also contemplated to be suitable. The annular elements and related structures discussed herein need not be limited to those that provide spiral or cyclone cooling fluid flow.

## Claims

1. An apparatus comprising:
a cooling pin to slidably extend from a frame and to be inserted into an injection molded article, the cooling pin being hollow to allow for flow of cooling fluid through the cooling pin, the cooling pin having a hole to be in fluid communication with a source of vacuum to draw cooling fluid within the injection molded article into the cooling pin;
the cooling pin having a first position with respect to the frame, the first position to allow flow of cooling fluid through the hole;
the cooling pin having a second position with respect to the frame, the second position to shut off flow of cooling fluid into the cooling pin.

2. The apparatus of claim 1, wherein the cooling pin has a third position with respect to the frame, the third position to shut off the source of vacuum at the hole.

3. The apparatus of claim 2, further comprising a biasing mechanism coupled to the cooling pin, the biasing mechanism to bias the cooling pin away from the second position and towards the third position.

4. The apparatus of claim 1, further comprising a biasing mechanism coupled to the cooling pin, the biasing mechanism to bias the cooling pin towards the injection molded article to eject the injection molded article off the cooling pin.

5. The apparatus of claim 4, wherein the biasing mechanism comprises a spring.

6. The apparatus of claim 1, wherein vacuum applied at the hole of the cooling pin holds the cooling pin in the second position and holds the injection molded article with respect to the cooling pin.

7. The apparatus of claim 1, wherein the second position of the cooling pin seals an open end of the injection molded article closed to block intake of cooling fluid into the injection molded article and the cooling pin.

8. The apparatus of claim 1, further comprising a spiral-flow inducing annular element slidable with the cooling pin, the spiral-flow inducing annular element to provide cooling fluid into the injection molded article in the first position and to block intake of cooling fluid into the injection molded article in the second position.

9. The apparatus of claim 1, wherein the cooling pin has a plurality of holes including the hole.

10. The apparatus of claim 1, wherein the injection molded article is an injection molded preform.
